(19) Europäisches Patentamt / European Patent Office / Office européen des brevets

(11) **EP 4 270 362 A1**

(12) **DEMANDE DE BREVET EUROPEEN**

(43) Date de publication:
**01.11.2023 Bulletin 2023/44**

(21) Numéro de dépôt: **23165786.7**

(22) Date de dépôt: **31.03.2023**

(51) Classification Internationale des Brevets (IPC):
**G08G 5/00** (2006.01)  **G05D 1/00** (2006.01)
**G05D 1/02** (2020.01)

(52) Classification Coopérative des Brevets (CPC):
**G08G 5/0026; G05D 1/0016; G05D 1/0044;
G08G 5/006; G08G 5/0069**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **28.04.2022 FR 2203939**

(71) Demandeur: **Airbus Helicopters
13725 Marignane Cedex (FR)**

(72) Inventeurs:
• **SIMON, Julien
84240 PEYPIN D'AIGUES (FR)**
• **MESNIL, Arnaud
13480 CABRIES (FR)**

(74) Mandataire: **GPI Brevets
1330, rue Guillibert de la Lauzière
EuroParc de Pichaury
Bât B2
13856 Aix en Provence Cedex 3 (FR)**

(54) **ESTIMATEUR DE TRAJECTOIRE POUR DRONE**

(57) La présente invention concerne un procédé d'aide au maintien d'un drone dans un espace aérien autorisé. Ce procédé comporte un affichage de plusieurs symboles sur un afficheur (21) d'un estimateur de trajectoire comprenant: i) un affichage d'un symbole d'aéronef (35) illustrant une position courante du drone par rapport audit espace aérien (100) autorisé, ii) un affichage d'un symbole de limitation (30) illustrant une limite dudit espace aérien dans une position par rapport au symbole d'aéronef (35) représentative d'une position de la limite par rapport à la position courante du drone, et iii) la détermination d'une géométrie et l'affichage d'un symbole de trajectoire (50) illustrant une trajectoire prédite du drone sans changement de valeurs d'une donnée de vitesse et d'une donnée de navigation, ladite géométrie du symbole de trajectoire (50) étant fonction au moins de la valeur de la donnée de vitesse (DVIT) et de la valeur de la donnée de navigation (DNAV).

Fig.3

## Description

Un drone est un aéronef sans pilote embarqué. Un drone peut, par exemple, être piloté par un pilote à distance, à l'aide de commandes en communication sans fil avec le drone.

L'espace aérien dans lequel un drone est autorisé à évoluer peut être limité. Le maintien, à distance, du drone dans un espace limité peut s'avérer délicat pour un pilote non embarqué dans le drone.

Le document FR 2 841 977 B1 est éloigné de cette problématique en ayant trait à un procédé d'aide à la navigation d'un aéronef et plus particulièrement d'aide à l'alignement de l'aéronef sur une trajectoire prédéterminée. Ce procédé comporte la détermination en fonction du vent de la géométrie d'un palpeur, à savoir la trajectoire sol que suivrait l'aéronef s'il débutait à l'instant un virage au taux maximal applicable à la phase de vol dans laquelle l'aéronef se situe. De plus, le procédé comporte l'affichage, sur un écran de navigation de l'aéronef, du palpeur et d'une trajectoire sol à capturer sur laquelle l'aéronef doit s'aligner, en vue de réaliser une mise en virage de l'aéronef permettant de capturer au mieux la trajectoire sol à capturer. L'aéronef peut alors être mis en virage lorsque le palpeur tangente la trajectoire sol à capturer.

De même, les documents FR 2 920 232 B1 et US 2009/055037 A1 visent un procédé et un dispositif d'aide au pilotage d'un avion pour capturer un axe de vol, tel qu'un axe de ravitaillement en vol ou un axe d'approche, en respectant une consigne de roulis. Le dispositif comporte des moyens pour déterminer, à l'aide de la consigne de roulis et de valeurs courantes mesurées de caractéristiques extérieures et de caractéristiques de vol de l'avion, une trajectoire prédite qui est une trajectoire de vol à angle de roulis constant, tenant compte de l'effet du vent. Un pilote peut moduler la valeur de la consigne de roulis jusqu'à obtenir une trajectoire possible qui tangente l'axe de vol à rejoindre.

Le document US 2021/375143 A1 décrit un véhicule aérien sans pilote qui peut comprendre un contrôleur de vol configuré pour générer un ou plusieurs signaux qui amènent le véhicule aérien sans pilote à fonctionner conformément à un ensemble de règlements de vol qui sont générés à partir d'un dispositif de géolocalisation.

Le document US 2012/150426 A1 décrit un système et un procédé pour surveiller un aéronef et anticiper un possible écartement par rapport à un couloir aérien. Ce procédé prévoit notamment les étapes suivantes : recevoir des données de l'état de l'aéronef, déterminer une position future prédite de l'aéronef sur la base des données de l'état de l'aéronef; et déclencher une alerte en réponse à la comparaison de la future position prédite à une contrainte de navigation de trafic aérien attribuée à l'aéronef.

La présente invention a alors pour objet de proposer un estimateur de trajectoire d'un drone visant à simplifier le travail d'un pilote non embarqué afin de respecter les limites d'un espace aérien autorisé.

La présente invention concerne un procédé d'aide au maintien d'un drone dans un espace aérien autorisé. Ce procédé comporte les étapes suivantes :

- détermination, avec un estimateur de trajectoire non embarqué dans le drone, d'une valeur d'une donnée de vitesse dudit drone ainsi que d'une valeur d'une donnée de localisation porteuse d'une position courante du drone et d'une valeur d'une donnée de navigation du drone permettant d'évaluer si le drone vole en ligne droite ou en virage,

- affichage de plusieurs symboles sur un afficheur dudit estimateur de trajectoire, ledit affichage de plusieurs symboles comprenant : i) affichage d'un symbole d'aéronef illustrant une position courante du drone, par rapport audit espace aérien autorisé, ii) affichage d'un symbole de limitation illustrant une limite dudit espace aérien autorisé dans une position par rapport au symbole d'aéronef représentative d'une position de la limite dudit espace aérien autorisé par rapport à la position courante du drone, et iii) détermination d'une géométrie et affichage d'un symbole de trajectoire illustrant une trajectoire prédite du drone sans changement de valeurs de la donnée de vitesse et de la donnée de navigation, ladite géométrie du symbole de trajectoire étant une forme du symbole de trajectoire déterminée à l'aide d'un modèle mémorisé fonction au moins de la valeur de la donnée de vitesse et de la valeur de la donnée de navigation.

Le modèle peut comprendre par exemple une ou plusieurs lois mathématiques, une ou plusieurs équations....

Par suite, l'estimateur de trajectoire est configuré pour déterminer les valeurs des données de vitesse, de navigation et de localisation. A cet effet, l'estimateur de trajectoire peut comprendre un récepteur recevant au moins une de ces données de vitesse, de navigation et de localisation, par exemple en provenance du drone de manière usuelle, ou pour recevoir une information lui permettant de calculer au moins une des valeurs des données de vitesse, de navigation et de localisation.

Ainsi, l'expression « détermination, avec un estimateur de trajectoire non embarqué dans le drone, d'une valeur d'une donnée de vitesse dudit drone ainsi que d'une valeur d'une donnée de localisation porteuse d'une position courante du drone et d'une valeur d'une donnée de navigation du drone » signifie que l'estimateur de trajectoire reçoit au moins un signal et le décode pour en déduire la valeur d'au moins une desdites données et/ou que l'estimateur de trajectoire calcule la valeur en question.

La donnée de localisation permet d'estimer la position courante du drone par rapport à une limite de l'espace aérien autorisé. La donnée de navigation permet d'évaluer si le drone vole en ligne droite ou en virage pour savoir si le drone se dirige vers une telle limite de l'espace aérien autorisé. Enfin, la donnée de vitesse permet d'évaluer si le drone se rapproche à court terme d'une telle limite de l'espace aérien autorisé.

Dès lors, l'estimateur de trajectoire est configuré pour déduire et positionner, sur un afficheur, a minima un symbole d'aéronef, un symbole de limitation, du moins quand le symbole de limitation peut apparaitre sur l'afficheur, et un symbole de trajectoire.

Par suite, un pilote du drone peut visualiser sur l'afficheur où se trouve le drone par rapport aux limites de l'espace aérien autorisé et peut savoir si le drone est susceptible de sortir de l'espace aérien autorisé à court terme si la trajectoire du drone est inchangée. Si le symbole de trajectoire coupe le symbole de limitation alors le drone va franchir une limite de l'espace aérien autorisé à court terme. Le pilote peut alors prendre les mesures adéquates pour modifier la trajectoire du drone et le maintenir dans l'espace aérien autorisé.

Le procédé n'est donc pas un procédé permettant d'établir une trajectoire d'interception, du type des documents FR 2 841 977 B1 et FR 2 920 232 B1. L'estimateur de trajectoire n'a pas pour fonction d'évaluer des trajectoires de rejointe dépendantes de consignes possibles de roulis. Par contre, le procédé permet de prédire les positions successives du drone à court terme pour qu'un pilote non embarqué puisse maintenir le drone dans un espace aérien autorisé.

Le procédé peut comporter une ou plusieurs des caractéristiques qui suivent.

Selon une possibilité, ledit symbole de trajectoire peut être positionné par rapport à un angle de cap courant ou un angle de route courant dudit drone.

L'angle de route est parfois dénommé « Track ». L'angle de route et l'angle de cap sont égaux en l'absence de vent et de dérapage.

Le symbole de trajectoire peut ainsi être tangent à une droite dirigée selon l'angle de cap ou l'angle de route courant. Chacun de ces angles peut être mesuré par le drone ou un autre système et transmis à l'estimateur de trajectoire, voire peut être calculé par l'estimateur de trajectoire ou un autre équipement à partir de positions successives du drone par exemple.

Selon une possibilité compatible avec les précédentes, ladite donnée de vitesse peut être une vitesse air ou une vitesse sol, et/ou ladite donnée de navigation peut être un angle de roulis ou un angle de route ou un angle de cap.

La donnée de vitesse permet d'évaluer si le drone se rapproche rapidement d'une limite de l'espace aérien autorisé. La vitesse sol peut être déterminée de manière usuelle et peut être utilisée. Alternativement, une vitesse air est usuellement mesurée par un drone et peut être utilisée.

Par ailleurs, la donnée de navigation est une donnée permettant d'évaluer si le drone évolue en ligne droite ou en virage. Par exemple, la donnée de navigation peut comprendre un angle de navigation, à savoir un angle de roulis du drone ou un angle de route voire de cap qui peuvent permettre d'estimer la trajectoire du drone par rapport au sol.

Selon une possibilité compatible avec les précédentes, préalablement à l'étape d'affichage de plusieurs symboles, ledit procédé peut comporter la détermination que le drone effectue un vol en ligne droite ou un virage en fonction de la donnée de navigation avec ou sans hystérésis, ledit symbole de trajectoire prenant la forme d'un segment durant un vol en ligne droite et d'une courbe durant un virage.

Par exemple, l'estimateur de trajectoire peut considérer que le drone suit une ligne droite ou un virage au regard d'une valeur de l'angle de roulis courant par comparaison à un unique seuil de navigation, ou avec hystérésis en utilisant au moins deux seuils de navigation pour éviter un phénomène de bagotement.

Selon un autre exemple, la dérivée ou la pseudo dérivée par rapport au temps de l'angle de route ou de cap peut être utilisée.

En fonction de la situation, la forme calculée du symbole de trajectoire est modifiée par l'estimateur de trajectoire, en prenant l'aspect soit d'un segment de droite continu ou discontinu lors d'un vol rectiligne soit d'une courbe voire d'un arc de cercle continu ou discontinu en virage.

Selon une possibilité compatible avec les précédentes, préalablement à l'étape d'affichage de plusieurs symboles et en présence d'un virage, le procédé peut comporter la détermination avec l'estimateur de trajectoire d'un rayon de virage en fonction de la donnée de vitesse et de la donnée de navigation, ladite géométrie du symbole de trajectoire étant fonction du rayon de virage, voire aussi d'une durée fixe ou réglable et/ou du vent.

Selon un exemple, le symbole de trajectoire a la forme d'un arc de cercle présentant le rayon de virage multiplié par un facteur d'échelle.

Dans ce cas, le vent n'est pas pris en compte dans le calcul de la forme de la courbe du symbole de trajectoire. La prise en compte du vent complexifie la trajectoire suivie et la forme du symbole de trajectoire. L'estimateur de trajectoire ayant pour fonction de fournir des indications à un pilote non embarqué, une telle approximation peut être suffisante.

Selon un autre exemple, le symbole de trajectoire peut prendre en considération non seulement le rayon de virage mais aussi le vent. Le symbole de trajectoire n'a alors pas nécessairement la forme d'un arc de cercle en fonction de la vitesse et du sens du vent.

En fonction de la nature de la donnée de navigation, le rayon de virage peut être estimé de diverses manières.

Selon une première variante de calcul du rayon de virage, le rayon de virage peut être déterminé à l'aide la relation suivante :

$$R = (V*V)/(g*\tan(phi))$$

où « R » représente le rayon de virage, en mètre par exemple, « V » représente la donnée de vitesse, en mètre par seconde par exemple, « g » représente l'accélération de la pesanteur, en mètre par seconde au carré par exemple, « phi » représente la donnée de navigation sous la forme d'un angle de roulis, en radian par exemple, « = » représente le signe de l'égalité, « / » représente le signe de la division, « * » représente le signe de la multiplication.

Selon une deuxième variante de calcul du rayon de virage, le rayon de virage peut être déterminé à l'aide la relation suivante :

$$R = V/(dxi/dt)$$

où « R » représente le rayon de virage, « V » représente la donnée de vitesse, « dxi/dt » représente la dérivée ou la pseudo-dérivée par le temps de la donnée de navigation sous la forme d'un angle de route ou de cap, « = » représente le signe de l'égalité, « / » représente le signe de la division.

Selon une possibilité compatible avec les précédentes, ledit symbole d'aéronef peut être positionné le long d'un premier axe géométrique partageant un écran de l'afficheur en un premier côté et un deuxième côté, lors d'un dit virage, le procédé comporte la détermination de la position d'un centre le long d'un deuxième axe orthogonal au premier axe à une distance du symbole d'aéronef égale au produit du rayon de virage et du facteur d'échelle, ledit procédé comportant une comparaison de la valeur de la donnée de navigation à au moins un seuil de navigation, ledit centre étant positionné du premier côté ou du deuxième côté en fonction de ladite comparaison, ledit symbole de trajectoire ayant un arc de cercle partant dudit symbole d'aéronef et centré sur ledit centre.

Le premier axe peut être fixe et/ou aligné sur l'angle de cap ou de route courant. Le premier axe peut être aligné sur un segment du symbole d'aéronef.

Par exemple, lorsque la donnée de navigation est un angle de roulis positif alors le symbole de trajectoire est situé à droite du premier axe, et lorsque la donnée de navigation est un angle de roulis négatif alors le symbole de trajectoire est situé à gauche du premier axe.

Selon exemple, lorsque la donnée de navigation est un angle de route ou de cap et la dérivée de cet angle de route ou de cap est positive, alors le symbole de trajectoire est situé à droite du premier axe, et lorsque la donnée de navigation est un angle de route ou de cap et la dérivée de cet angle de route ou de cap est négative alors le symbole de trajectoire est situé à gauche du premier axe.

Selon une possibilité compatible avec les précédentes, ledit symbole de trajectoire peut être porteur de ladite trajectoire prédite que suivra le drone durant une durée à venir fixe ou réglable, une longueur du symbole de trajectoire étant bornée pour ne pas dépasser une longueur prédéterminée.

Ladite durée peut être paramétrée à l'aide d'une interface homme-machine de l'estimateur de trajectoire ou peut être fixe et mémorisée. Par exemple, la durée est égale à 30 secondes.

Afin d'obtenir des informations lisibles, la longueur du symbole de trajectoire peut être bornée. Selon un exemple, en virage, le symbole de trajectoire peut au maximum couvrir un demi-cercle.

Selon une possibilité compatible avec les précédentes, ledit affichage du symbole de trajectoire peut être inhibé en dessous d'une vitesse air ou d'une vitesse sol du drone mémorisée, avec ou sans hystérésis.

A basse vitesse, par exemple en dessous de 30 noeuds, soit environ 15.4 mètres par seconde, le symbole de trajectoire peut ne pas être affiché. A cette vitesse, le pilote peut en effet rapidement corriger la trajectoire du drone. En outre, les mesures de vitesse peuvent être approximatives et peuvent induire l'affichage d'un symbole de trajectoire peu cohérent avec la réalité.

La détermination de la présence d'une basse vitesse ou d'une haute vitesse peut être réalisée sans hystérésis ou avec hystérésis pour éviter un phénomène de bagotement à proximité d'un seuil de vitesse.

Selon une possibilité compatible avec les précédentes, ledit procédé peut comporter un filtrage d'au moins une donnée parmi ladite donnée de vitesse et ladite donnée de navigation avec un filtre passe-bas.

Un tel filtre peut permettre d'éliminer des données erronées, par exemple suite à un problème temporaire de réception ou d'émission d'informations.

Selon une possibilité compatible avec les précédentes, ledit affichage de plusieurs symboles peut comporter un affichage sur l'afficheur d'une représentation du terrain survolé au dessus de laquelle sont superposés le symbole d'aéronef, le symbole de limitation et le symbole de trajectoire.

Par exemple, une telle représentation peut prendre la forme d'une carte, intégrant ou non le symbole de limitation.

Outre un procédé, l'invention vise aussi un estimateur de trajectoire non embarqué pour drone configuré pour mettre en oeuvre ce procédé.

L'invention vise aussi un ensemble comprenant un drone et un tel estimateur de trajectoire non embarqué dans le drone.

Le drone peut comporter un senseur de vitesse mesurant ladite donnée de vitesse ainsi qu'un senseur de navigation mesurant ladite donnée de navigation et un senseur de position mesurant ladite donnée de localisation, ledit drone ayant un émetteur transmettant ladite donnée de vitesse ainsi que ladite donnée de navigation et ladite donnée de localisation, ledit estimateur de trajectoire ayant un récepteur recevant ladite donnée de vitesse ainsi que ladite donnée de navigation et ladite donnée de localisation.

L'estimateur de trajectoire peut être configuré pour afficher le symbole de limitation, le symbole d'aéronef et le symbole de trajectoire.

L'estimateur de trajectoire peut être configuré pour mémoriser un emplacement géographique d'une limite délimitant un espace aérien autorisé et/ou une carte géographique du terrain survolé contenant éventuellement cette limite.

L'estimateur de trajectoire peut être configuré pour positionner ledit symbole de trajectoire par rapport à un angle de cap ou un angle de route courant.

L'estimateur de trajectoire peut être configuré pour déterminer si le drone effectue un vol en ligne droite ou un virage en fonction de la donnée de navigation, avec ou sans hystérésis, ledit symbole de trajectoire comprenant un segment durant un vol en ligne droite et une courbe durant un virage.

L'estimateur de trajectoire peut être configuré pour déterminer un rayon de virage en fonction de la donnée de vitesse et de la donnée de navigation.

L'estimateur de trajectoire peut être configuré pour ne pas afficher ledit symbole de trajectoire en dessous d'une vitesse air ou sol prédéterminée, avec ou sans hystérésis.

L'estimateur de trajectoire peut être configuré pour filtrer au moins une donnée parmi ladite donnée de vitesse et ladite donnée de navigation avec un filtre passe-bas.

L'invention et ses avantages apparaîtront avec plus de détails dans le cadre de la description qui suit avec des exemples donnés à titre illustratif en référence aux figures annexées qui représentent :

la figure 1, un ensemble ayant un drone et un estimateur de trajectoire selon l'invention,

la figure 2, un logigramme explicitant le procédé de l'invention,

la figure 3, une vue d'un afficheur affichant un symbole de trajectoire rectiligne,

la figure 4, une vue d'un afficheur affichant un symbole de trajectoire courbe,

la figure 5, une vue d'un afficheur bornant une longueur d'un symbole de trajectoire courbe, et

la figure 6, une vue d'un afficheur affichant un symbole de d'aéronef mobile par rapport à l'afficheur.

Les éléments présents dans plusieurs figures distinctes sont affectés d'une seule et même référence.

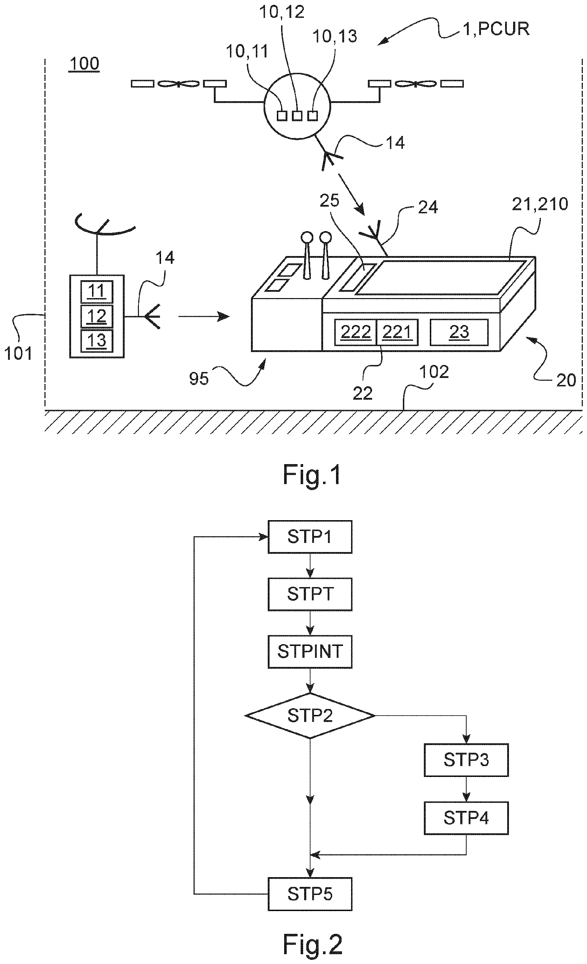

La figure 1 présente un estimateur de trajectoire 20 selon l'invention. L'estimateur de trajectoire 20 peut appartenir à un ensemble comprenant un drone 1, l'estimateur de trajectoire 20 n'étant de fait pas embarqué dans le drone 1.

Cet estimateur de trajectoire 20 peut éventuellement faire partie intégrante d'une station de commande d'un drone 1, cette station de commande comprenant des commandes usuelles.

Cet estimateur de trajectoire 20 est muni d'un afficheur 21. L'afficheur 21 peut comprendre un écran 210, tel que par exemple un écran d'une tablette, une visière de casque, un verre de lunette, ou autres.

L'estimateur de trajectoire 20 comprend un contrôleur 22 apte à piloter l'afficheur 21 afin d'afficher des symboles divers. Le contrôleur 22 peut comprendre au moins un calculateur.

Le terme « calculateur » peut désigner une unité de traitement comprenant par exemple au moins un processeur, au moins un circuit intégré, au moins un système programmable, au moins un circuit logique, ces exemples ne limitant pas la portée donnée à l'expression « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur...

Par exemple, le contrôleur 22 peut comprendre un calculateur de traitement 221 effectuant divers traitements et un calculateur générateur de symboles 222 générant les symboles à afficher. Le contrôleur 22 peut en tout ou partie être intégré à l'afficheur 21, par exemple au sein d'une tablette.

L'estimateur de trajectoire 20 peut comprendre une mémoire 23 en communication filaire ou non filaire avec le contrôleur 22. Cette mémoire 23 peut mémoriser au moins une carte géographique d'un terrain 102 survolé par un drone 1, et/ou une valeur de durée prédéterminée et/ou les coordonnées géographiques d'au moins une limite 101 d'un espace aérien 100 autorisé et/ou un code appliqué par le contrôleur 22. Une carte géographique d'un terrain 102 peut intégrer une telle limite 101.

L'estimateur de trajectoire 20 peut comprendre une interface homme-machine 25 en communication filaire ou non filaire avec le contrôleur 22 pour permettre à un opérateur d'effectuer divers paramétrages, par exemple le paramétrage de ladite durée.

L'estimateur de trajectoire 20 peut comprendre un récepteur 24 apte à recevoir des données, par voie filaire ou non filaire.

Par exemple, le récepteur 24 peut être en communication avec au moins un senseur 10 via au moins un émetteur 14.

En particulier, le récepteur 24 peut être en communication avec un senseur de vitesse 11 transmettant via un émetteur 14 un signal porteur d'une donnée de vitesse DVIT du drone 1, telle qu'une vitesse air ou une vitesse sol par exemple. Un tel senseur de vitesse 11 peut comprendre par exemple une centrale inertielle embarquée dans le drone 1, un système AHRS embarqué dans le drone 1, un senseur de vitesse à tube de Pitot embarqué par le drone 1. Un senseur de vitesse 11 peut comprendre un récepteur d'un système de positionnement par satellites embarqué dans le drone 1 ou un senseur d'une station radar, le contrôleur 22 ou un calculateur du senseur de vitesse pouvant déterminer une vitesse du drone 1 à partir de positions courantes PCUR successives du drone 1 de manière usuelle.

Pour mémoire, l'acronyme « AHRS » désigne un système connu sous l'expression anglaise « Attitude and Heading Reference System ».

Le récepteur 24 peut être en communication avec un senseur de localisation 12 transmettant via un émetteur 14 un signal porteur d'une donnée de position DPOS du drone 1, soit directement sous la forme de coordonnées par exemple ou indirectement via des vitesses permettant de déterminer lesdites coordonnées à partir d'une position de départ de manière usuelle. Un tel senseur de localisation 12 peut comprendre par exemple une centrale inertielle embarquée dans le drone 1, un système AHRS embarqué dans le drone 1, un senseur de vitesse à tube de Pitot embarqué par le drone 1, un récepteur d'un système de positionnement par satellites embarqué dans le drone 1 ou un senseur d'une station radar.

Le récepteur 24 peut être en communication avec un senseur de navigation 13 transmettant via un émetteur 14 un signal porteur d'une donnée de navigation DNAV du drone 1, telle qu'un angle de cap ACAP ou un angle de route ATRACK voire un angle de roulis AROL, soit directement soit via des positions courantes successives du drone 1. Un tel senseur de navigation 13 peut comprendre par exemple une centrale inertielle embarquée dans le drone 1, un système AHRS embarqué dans le drone 1, un senseur de vitesse à tube de Pitot embarqué par le drone 1, un récepteur d'un système de positionnement par satellites embarqué dans le drone 1 ou un senseur d'une station radar.

Selon un exemple, le drone 1 comporte alors au moins un des senseurs de vitesse 11, de position 12 et de navigation 13 relié à un émetteur 14. Par exemple, le drone 1 comporte à cet effet un système connu sous l'acronyme ADS-B correspondant à l'expression anglaise « Automatic dépendent surveillance-broadcast ».

Selon un exemple, une station radar peut comprendre au moins un des senseurs de vitesse 11, de position 12 et de navigation 13 relié à un émetteur 14.

Indépendamment de la manière de réaliser l'estimateur de trajectoire 20, cet estimateur de trajectoire 20 est configuré pour appliquer le procédé de l'invention illustré sous forme de logigramme sur la figure 2.

L'estimateur de trajectoire 20 est en effet configuré pour réaliser en boucle les étapes décrites par la suite.

Ainsi, l'estimateur de trajectoire 20 est configuré pour réaliser une détermination STP1 de la valeur de la donnée de vitesse DVIT du drone 1 observé, de la valeur de la donnée de localisation DPOS porteuse de la position courante PCUR du drone 1 et de la valeur de la donnée de navigation DNAV du drone 1.

Selon un exemple, le contrôleur 22, et par exemple un calculateur de traitement 221, réceptionne et décode les signaux reçus par le récepteur 24, soit pour récupérer directement une ou plusieurs desdites valeurs, soit pour la ou les calculer. Par exemple, le contrôleur 22 calcule de manière usuelle la vitesse sol VS et/ou l'angle de cap ACAP ou de route ATRACK du drone 1 à partir de positions successives de ce drone 1. Ces exemples sont donnés à titre illustratif, l'homme du métier étant à même de réaliser un estimateur de trajectoire 20 apte à déterminer lesdites valeurs selon de multiples techniques.

Indépendamment de la manière de mettre en oeuvre cette étape de détermination STP1, à l'issue de cette étape de détermination STP1 l'estimateur de trajectoire 20 peut exploiter la valeur d'une donnée de vitesse DVIT du drone 1, la vitesse sol VS ou une vitesse air et notamment la vitesse air vraie TAS par exemple, la valeur d'une donnée de position, les coordonnées du drone 1 dans le référentiel terrestre par exemple, et la valeur d'au moins une donnée de navigation, un angle de cap ACAP ou un angle de route ATRACK voire un angle de roulis AROL par exemple.

L'estimateur de trajectoire 20 est en outre configuré pour réaliser un affichage STP5 de plusieurs symboles sur l'afficheur 21 éventuellement sous condition.

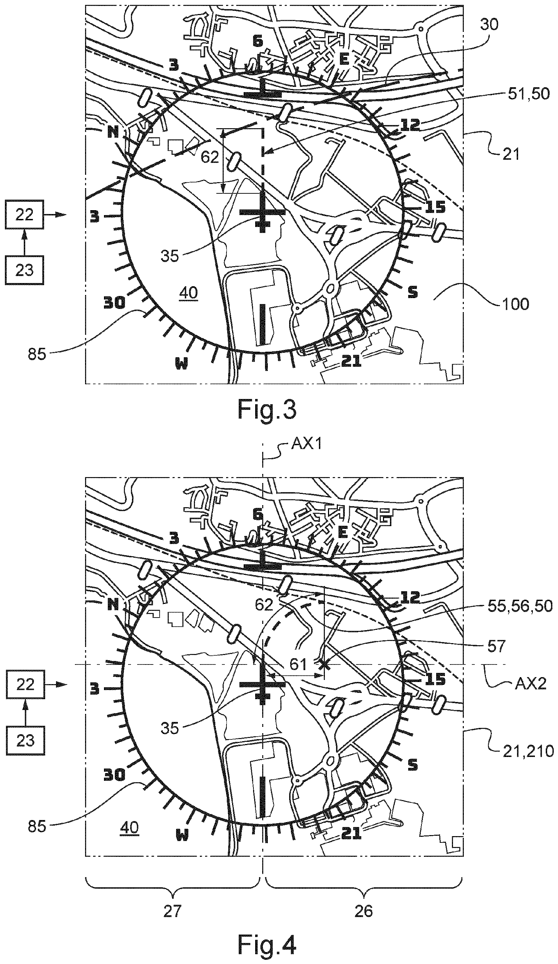

En référence à la figure 3, le contrôleur 22 est configuré pour piloter l'afficheur 21 afin d'afficher un symbole d'aéronef 35 positionné sur l'afficheur 21 à une localisation illustrant la position courante PCUR du drone 1 dans l'espace aérien 100 autorisé. Par exemple, le symbole d'aéronef 35 a une forme figée, éventuellement sensiblement en croix de lorraine. Par exemple, ce symbole d'aéronef 35 est toujours positionné à un endroit particulier de l'afficheur 21, voire toujours dans une même position prédéterminée. Par exemple, sur un afficheur 21 de forme carré ou rectangulaire, le nez du symbole d'aéronef 35 est positionné à l'intersection des diagonales de cette forme.

Eventuellement, le contrôleur 22 pilote l'afficheur 21 afin d'afficher de manière conforme une représentation 40 du terrain 102 survolé par le drone 1. Dès lors, le symbole d'aéronef 35 peut être disposé en superposition de cette représentation 40. Le contrôleur 22 est notamment configuré pour que la représentation 40 représente une partie du terrain située au droit de la position courante PCUR du drone 1 et pour afficher le symbole d'aéronef 35 de manière conforme au droit de cette position courante PCUR sur la représentation 40. Cette représentation 40 peut être mémorisée dans la mémoire 23.

Le contrôleur 22 est configuré pour piloter l'afficheur 21 afin d'afficher un symbole de limitation 30, le cas échéant en superposition de ladite représentation 40. Le symbole de limitation 30 prend la forme d'une courbe illustrant la limite 101 de l'espace aérien 100 autorisé.

Les coordonnées géographiques de cette limite peuvent être mémorisées dans la mémoire 23. Dès lors, le contrôleur 22 peut être configuré pour déterminer la forme du symbole de limitation 30 afin que le symbole de limitation 30 s'étende par rapport au symbole d'aéronef 35 au même endroit que la limite 101 par rapport au drone 1, au facteur d'échelle de l'estimateur de trajectoire près.

Alternativement, le symbole de limitation 30 peut être une partie intégrante de la représentation 40. Autrement dit, la représentation 40 affichée est une partie d'une carte géographique sur laquelle est dessinée ladite limite 101.

Le contrôleur 22 est configuré pour piloter l'afficheur 21 afin de déterminer la forme d'un symbole de trajectoire 50 et d'afficher ce symbole de trajectoire 50. Le symbole de trajectoire 50 illustre une trajectoire prédite du drone 1 sans changement de valeurs de la donnée de vitesse DVIT et de la donnée de navigation DNAV, voire sans vent. Le contrôleur 22 est configuré pour calculer la géométrie du symbole de trajectoire 50 en fonction au moins voire uniquement de la valeur de la donnée de vitesse DVIT et de la valeur de la donnée de navigation DNAV.

Eventuellement, le symbole de trajectoire 50 est positionné de manière à être tangent voire au moins localement superposé à une droite passant par le drone 1 et dirigée suivant un angle de cap ACAP courant ou un angle de route ATRACK courant dudit drone 1.

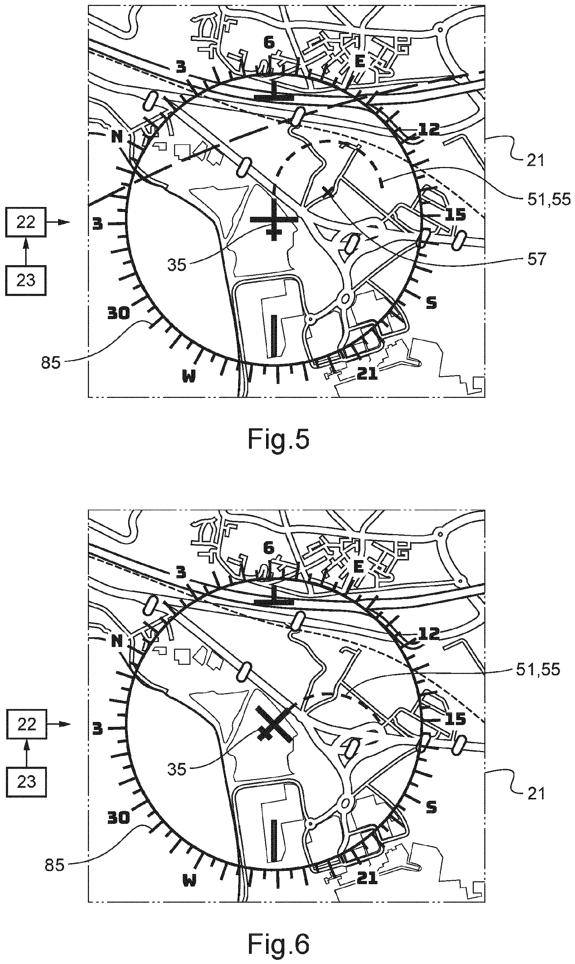

Selon une possibilité illustrée notamment sur la figure 3, le contrôleur 22 peut afficher sur l'afficheur 21 une échelle 85 de cap ou de route mobile par rapport au symbole d'aéronef 35. Selon l'exemple de la figure 6, l'échelle 85 de cap ou de route est fixe, le symbole d'aéronef 35 étant mobile par rapport à cette échelle.

En référence à la figure 2, le procédé peut comprendre une étape d'inhibition STPT de l'affichage du symbole de trajectoire 50 en dessous d'une vitesse air TAS ou d'une vitesse sol VS du drone 1 mémorisée, avec ou sans hystérésis.

Selon un exemple sans hystérésis, le contrôleur 22 compare la valeur de la donnée de vitesse DVIT à un unique seuil de vitesse. Si la valeur de la donnée de vitesse DVIT est supérieure ou égale au seuil, alors l'affichage du symbole de trajectoire 50 est autorisé. Si la valeur de la donnée de vitesse DVIT est inférieure au seuil, alors l'affichage du symbole de trajectoire 50 est interdit.

Alternativement, le contrôleur 22 peut effectuer cette comparaison avec une hystérésis par comparaison à deux seuils de vitesse. En partant d'une situation où l'affichage du symbole de trajectoire 50 est autorisé, si la valeur de la donnée de vitesse DVIT baisse et devient inférieure à un premier seuil de vitesse, par exemple de 30 noeuds, soit environ 15.4 mètres par seconde, alors l'affichage du symbole de trajectoire 50 devient interdit. En partant d'une situation où l'affichage du symbole de trajectoire 50 est inhibé, si la valeur de la donnée de vitesse DVIT augmente et devient supérieure à un deuxième seuil de vitesse, le deuxième seuil de vitesse étant supérieur au premier seuil de vitesse et par exemple de 35 noeuds, soit environ 18 mètres par seconde, alors l'affichage du symbole de trajectoire 50 devient actif.

Préalablement à l'étape d'affichage STP5 de plusieurs symboles, l'estimateur de trajectoire 20, voire le contrôleur 22, peut effectuer un filtrage STPINI de la valeur de la donnée de vitesse DVIT et/ou de la valeur de la donnée de navigation DNAV avec un filtre passe-bas, par exemple de l'ordre d'une ou plusieurs secondes.

Par ailleurs, pour déterminer la géométrie du symbole de trajectoire 50, préalablement à l'étape d'affichage STP5 de plusieurs symboles, l'estimateur de trajectoire 20, voire le contrôleur 22, peut être configuré pour réaliser une détermination STP2 que le drone 1 effectue un vol en ligne droite ou un virage en fonction de la donnée de navigation DNAV, avec ou sans hystérésis. En effet, l'estimateur de trajectoire 20, voire le contrôleur 22 voire le générateur de symbole 222, peut être configuré pour conférer au symbole de trajectoire 50 sous la forme d'un segment 51 durant un vol en ligne droite et d'une courbe 55 durant un virage.

Selon un exemple, l'estimateur de trajectoire 20, voire le contrôleur 22, compare la valeur de la donnée de navigation DNAV à un unique seuil de navigation.

Par exemple, si la valeur de la donnée de navigation DNAV est un angle de roulis positif ou négatif alors l'estimateur de trajectoire 20 voire le contrôleur 22 considère que le drone 1 effectue un virage. Si la valeur de la donnée de navigation DNAV est égale à zéro alors l'estimateur de trajectoire 20 voire le contrôleur 22 considère que le drone 1 vole en ligne droite.

Alternativement, l'estimateur de trajectoire 20, voire le contrôleur 22, peut effectuer cette comparaison avec une hystérésis par comparaison à au moins deux seuils de navigation.

En partant d'une situation où le drone 1 est en virage, si la valeur absolue de la donnée de navigation DNAV est un angle de roulis positif qui baisse et devient inférieure à un premier seuil de navigation, par exemple un angle de roulis de 3 degrés, alors l'estimateur de trajectoire 20, voire le contrôleur 22, en déduit que le drone 1 vole désormais en ligne droite.

En partant d'une situation où le drone 1 vole en ligne droite, si la valeur absolue de la donnée de navigation DNAV est un angle de roulis qui augmente et devient supérieure à un deuxième seuil de navigation, le deuxième seuil de navigation étant supérieur au premier seuil de navigation et par exemple de 5 degrés, alors l'estimateur de trajectoire 20, voire le contrôleur 22, estime que le drone 1 vole désormais en virage.

En référence à la figure 3, si le drone 1 vole en ligne droite, l'estimateur de trajectoire 20, voire le contrôleur 22, peut être configuré pour que le symbole de trajectoire 50 soit un segment 51 s'étendant à partir du symbole d'aéronef 35, par exemple à partir d'un sommet du symbole d'aéronef et/ou selon l'angle de cap ou de route courant. L'estimateur de trajectoire 20, voire le contrôleur 22, peut calculer la longueur 62 du segment 51 afin d'illustrer la trajectoire prédite que suivra le drone 1 lors d'une durée prédéterminée à venir. La longueur est alors égale au produit du facteur d'échelle, de la vitesse en mètre par seconde et de la durée en seconde. Le pilote du drone 1 peut alors évaluer s'il doit appliquer des actions correctives afin que le drone 1 reste dans l'espace aérien 100 autorisé.

Comme indiqué précédemment, la durée prédéterminée peut être mémorisée ou paramétrée. Eventuellement, la longueur 62 peut être bornée par une longueur maximale prédéterminée pour ne jamais dépasser une longueur maximale prédéterminée.

En référence à la figure 2, si le drone 1 est considéré en virage, l'estimateur de trajectoire 20, voire le contrôleur 22, peut être configuré pour, préalablement à l'étape d'affichage STP5 de plusieurs symboles, réaliser la détermination d'un rayon de virage R en fonction au moins de la donnée de vitesse DVIT et de la donnée de navigation DNAV, voire uniquement en fonction de la donnée de vitesse DVIT et de la donnée de navigation DNAV. L'estimateur de trajectoire 20, voire le contrôleur 22, est configuré pour déterminer lors de l'étape d'affichage STP5 de plusieurs symboles ladite géométrie du symbole de trajectoire 50 aussi en fonction de ce rayon de virage R.

Par exemple, le rayon de virage est déterminé à l'aide la relation suivante :

$$R=(V*V)/(g*\tan(phi))$$

où « R » représente le rayon de virage, « V » représente la donnée de vitesse (DVIT), « g » représente l'accélération de la pesanteur, « phi » représente la donnée de navigation (DNAV) sous la forme d'un angle de roulis, « = » représente le signe de l'égalité, « / » représente le signe de la division, « * » représente le signe de la multiplication.

Alternativement et en fonction de la nature de la donnée de navigation, le rayon de virage est déterminé à l'aide la relation suivante :

$$R=V/(dxi/dt)$$

où « R » représente le rayon de virage, « V » représente la donnée de vitesse DVIT, « dxi/dt » représente la dérivée ou la pseudo-dérivée par le temps de la donnée de navigation DNAV sous la forme d'un angle de route ou de cap, « = » représente le signe de l'égalité, « / » représente le signe de la division.

L'estimateur de trajectoire 20, voire le contrôleur 22, peut avoir la faculté d'appliquer les deux relations précédentes, l'estimateur de trajectoire 20, voire le contrôleur 22, sélectionnant l'alternative requise en fonction de la donnée de navigation reçue ou d'un paramétrage effectué avec une interface de l'estimateur de trajectoire 20 ou autre.

En référence à la figure 4, l'estimateur de trajectoire 20, voire le contrôleur 22, peut être configuré pour conférer au symbole de trajectoire 50 la forme d'un arc de cercle 56 présentant le rayon de virage R multiplié par un facteur d'échelle.

Selon un exemple de réalisation, le symbole d'aéronef 35 est positionné le long d'un premier axe géométrique AX1 partageant un écran 210 de l'afficheur 21 en un premier côté 26 et un deuxième côté 27.

L'estimateur de trajectoire 20, voire le contrôleur 22, est alors configuré pour déterminer de quel côté 26, 27 doit se trouver le symbole de trajectoire 50 en comparant la donnée de navigation DNAV à au moins un seuil de navigation. Par exemple, si l'angle de roulis est négatif, alors le symbole de trajectoire 50 doit se trouver au niveau du deuxième côté 27 et si l'angle de roulis est positif, alors le symbole de trajectoire 50 doit se trouver sur le premier côté 26 tel qu'illustré sur la figure 4, le seuil de navigation étant égal à zéro dans ce cas. Un test similaire peut être réalisé sur la base de l'angle de route ou de cap.

L'estimateur de trajectoire 20, voire le contrôleur 22, est alors configuré pour déterminer la position d'un centre 57. Ce centre 57 doit se situer le long d'un deuxième axe AX2 orthogonal au premier axe AX1, du côté 26,27 adéquat, et à une distance 61 du symbole d'aéronef 35, voire de l'intersection entre le premier axe et le deuxième axe. La distance 61 est égale au produit du rayon de virage R et du facteur d'échelle. L'axe AX2 peut être positionné par rapport à un point de référence du symbole d'aéronef 35.

En appliquant des formules trigonométriques classiques, l'estimateur de trajectoire 20, voire le contrôleur 22, est configuré pour dessiner un arc de cercle 56 centré sur le centre 57 et partant dudit symbole d'aéronef 35.

L'arc de cercle 56 peut s'étendre sur une longueur 62 afin d'illustrer la trajectoire prédite que suivra le drone 1 lors d'une durée prédéterminée à venir. Comme indiqué précédemment la durée prédéterminée peut être mémorisée ou paramétrée. Eventuellement, la longueur 62 peut être bornée par une longueur maximale prédéterminée. Selon l'exemple de la figure 5, la longueur peut être bornée afin que l'arc de cercle 56 décrive au plus un demi-cercle.

Selon une autre variante, l'estimateur de trajectoire 20, voire le contrôleur 22, peut prendre en considération le vent pour déformer le symbole de trajectoire 50, selon des méthodes connues.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention et des revendications.

Par exemple, la figure 3 illustre les diverses étapes du procédé précédemment décrites selon un ordre particulier. Toutefois, un ordre différent peut être appliqué. Par exemple, l'étape d'inhibition STPT peut être réalisée à tout moment avant l'étape d'affichage STP5 de plusieurs symboles.

## Revendications

1. Procédé d'aide au maintien d'un drone (1) dans un espace aérien (100) autorisé, **caractérisé en ce que** ledit procédé comporte les étapes suivantes :

   - détermination (STP1), avec un estimateur de trajectoire (20) non embarqué dans le drone (1), d'une valeur d'une donnée de vitesse (DVIT) dudit drone (1) ainsi que d'une valeur d'une donnée de localisation (DPOS) porteuse d'une position courante (PCUR) du drone (1) et d'une valeur d'une donnée de navigation (DNAV) du drone (1) permettant d'évaluer si le drone (1) vole en ligne droite ou en virage,
   - affichage (STP5) de plusieurs symboles sur un afficheur (21) dudit estimateur de trajectoire (20), ledit affichage (STP5) de plusieurs symboles comprenant : i) affichage d'un symbole d'aéronef (35) illustrant une position courante (PCUR) du drone (1), ii) affichage d'un symbole de limitation (30) illustrant une limite (101) dudit espace aérien autorisé (100) dans une position par rapport au symbole d'aéronef (35) représentative d'une position de la limite dudit espace aérien autorisé par rapport à la position courante (PCUR) du drone (1), et iii) détermination d'une géométrie et affichage d'un symbole de trajectoire (50) illustrant une trajectoire prédite du drone (1) sans changement de valeurs de la donnée de vitesse (DVIT) et de la donnée de navigation (DNAV), ladite géométrie du symbole de trajectoire (50) étant une forme du symbole de trajectoire (50) déterminée à l'aide d'un modèle mémorisé fonction au moins de la valeur de la donnée de vitesse (DVIT) et de la valeur de la donnée de navigation (DNAV).

2. Procédé selon la revendication 1, **caractérisé en ce que** ledit symbole de trajectoire (50) est positionné par rapport à un angle de cap (ACAP) courant ou un angle de route (TRACK) courant dudit drone (1).

3. Procédé selon l'une quelconque des revendications 1 à 2, **caractérisé en ce que** ladite donnée de vitesse (DVIT) est une vitesse air (TAS) ou une vitesse sol (VS), ladite donnée de navigation (DNAV) est un angle de roulis ou un angle de cap (ACAP) ou un angle de route (TRACK).

4. Procédé selon l'une quelconque des revendications 1 à 3, **caractérisé en ce que** préalablement à l'étape d'affichage (STP5) de plusieurs symboles, ledit procédé comporte la détermination (STP2) que le drone (1) effectue un vol en ligne droite ou un virage en fonction de la donnée de navigation (DNAV) avec ou sans hystérésis, ledit symbole de trajectoire (50) prenant la forme d'un segment (51) durant un vol en ligne droite et d'une courbe (55) durant un virage.

5. Procédé selon la revendication 4, **caractérisé en ce que** préalablement à l'étape d'affichage (STP5) de plusieurs symboles et en présence d'un virage, le procédé comporte la détermination (STP3) avec l'estimateur de trajectoire (20) d'un rayon de virage (R) en fonction de la donnée de vitesse (DVIT) et de la donnée de navigation (DNAV), ladite géométrie du symbole de trajectoire (50) étant fonction du rayon de virage (R).

6. Procédé selon la revendication 5, **caractérisé en ce que** ledit symbole de trajectoire (50) a la forme d'un arc de cercle (56) présentant le rayon de virage (R) multiplié par un facteur d'échelle.

7. Procédé selon l'une quelconque des revendications 5 à 6, **caractérisé en ce que** le rayon de virage est déterminé à l'aide la relation suivante :

$$R=(V*V)/(g*\tan(phi))$$

où « R » représente le rayon de virage, « V » représente la donnée de vitesse (DVIT), « g » représente l'accélération de la pesanteur, « phi » représente la donnée de navigation (DNAV) sous la forme d'un angle de roulis, « = » représente le signe de l'égalité, « / » représente le signe de la division, « * » représente le signe de la multiplication.

8. Procédé selon l'une quelconque des revendications 5 à 6, **caractérisé en ce que** le rayon de virage est déterminé à l'aide la relation suivante :

$$R=V/(dxi/dt)$$

où « R » représente le rayon de virage, « V » représente la donnée de vitesse (DVIT), « dxi/dt » représente la dérivée ou la pseudo-dérivée de la donnée de navigation (DNAV) sous la forme d'un angle de route ou de cap, « = » représente le signe de l'égalité, « / » représente le signe de la division.

9. Procédé selon l'une quelconque des revendications 5 à 8,
   **caractérisé en ce que** ledit symbole d'aéronef (35) est positionné le long d'un premier axe géométrique (AX1) partageant un écran (210) de l'afficheur (21) en un premier côté (26) et un deuxième côté (27), lors d'un dit virage le procédé comporte la détermination (STP4) de la position d'un centre (57) le long d'un deuxième axe (AX2) orthogonal au premier axe (AX) à une distance (61) du symbole d'aéronef (35) égale au produit du rayon de virage (R) et d'u facteur d'échelle, ledit procédé comportant une comparaison de la valeur de la donnée de navigation (DNAV) à au moins un seuil de navigation, ledit centre (57) étant positionné du premier côté (26) ou du deuxième côté (27) en fonction de ladite comparaison, ledit symbole de trajectoire (50) ayant un arc de cercle (56) partant dudit symbole d'aéronef (35) et centré sur ledit centre (57).

10. Procédé selon l'une quelconque des revendications 1 à 9,
    **caractérisé en ce que** ledit symbole de trajectoire (50) est porteur de ladite trajectoire prédite que suivra le drone (1) durant une durée à venir fixe ou réglable, une longueur (62) du symbole de trajectoire (50) étant bornée pour ne pas dépasser une longueur prédéterminée.

11. Procédé selon l'une quelconque des revendications 1 à 10,
    **caractérisé en ce que** ledit affichage du symbole de trajectoire (50) est inhibé (STPT) en dessous d'une vitesse air (TAS) ou d'une vitesse sol (VS) du drone (1) mémorisée, avec ou sans hystérésis.

12. Procédé selon l'une quelconque des revendications 1 à 11,
    **caractérisé en ce que** ledit procédé comporte un filtrage (STPINI) d'au moins une donnée parmi ladite donnée de vitesse (DVIT) et ladite donnée de navigation (DNAV) avec un filtre passe bas.

13. Procédé selon l'une quelconque des revendications 1 à 12,
    **caractérisé en ce que** ledit affichage (STP5) de plusieurs symboles comporte un affichage sur l'afficheur (21) d'une représentation (40) du terrain (102) survolé au dessus de laquelle sont superposés le symbole d'aéronef (35), le symbole de limitation (30) et le symbole de trajectoire (50).

14. Estimateur de trajectoire non embarqué pour drone,
    **caractérisé en ce que** ledit estimateur de trajectoire (20) est configuré pour mettre en oeuvre le procédé selon l'une quelconque des revendications 1 à 13.

15. Ensemble comprenant un drone (1) et un estimateur de trajectoire (20) non embarqué dans le drone (1),
    **caractérisé en ce que** ledit estimateur de trajectoire (20) est selon la revendication 14.

16. Ensemble selon la revendication 15,
    **caractérisé en ce que** ledit drone (1) comporte un senseur de vitesse (11) mesurant ladite donnée de vitesse (DVIT) ainsi qu'un senseur de navigation (13) mesurant ladite donnée de navigation (DNAV) et un senseur de position (12) mesurant ladite donnée de localisation (DPOS), ledit drone (1) ayant un émetteur (14) transmettant ladite donnée de vitesse (DVIT) ainsi que ladite donnée de navigation (DNAV) et ladite localisation (DPOS), ledit estimateur de trajectoire (20) ayant un récepteur (24) recevant ladite donnée de vitesse (DVIT) ainsi que ladite donnée de navigation (DNAV) et ladite localisation (DPOS).

100

10,12

10,11  10,13

1,PCUR

14

25  24  21,210

14

11

12

13

101

95

222 221  23

22  102  20

## Fig.1

STP1

STPT

STPINT

STP2

STP3

STP4

STP5

## Fig.2

Fig.3

Fig.4

Fig.5

Fig.6

Europäisches
Patentamt

European
Patent Office

Office européen
des brevets

## RAPPORT DE RECHERCHE EUROPEENNE

Numéro de la demande

EP 23 16 5786

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2021/375143 A1 (GONG MING [CN] ET AL) 2 décembre 2021 (2021-12-02) <br> * alinéas [0004], [0099] – [0100], [0157], [0445] – [0446], [0454] – [0455], [0477] * <br> * alinéas [0518], [0534], [0536], [0588], [0918] – [0919], [0921], [0923], [0925] * <br> * alinéas [0928], [0930], [0932] – [0933], [0964] * <br> * figure 35 * <br> ----- | 1–16 | INV. <br> G08G5/00 <br> G05D1/00 <br> G05D1/02 |
| X | US 2012/150426 A1 (CONWAY SHEILA R [US]) 14 juin 2012 (2012-06-14) <br> * alinéas [0003] – [0006], [0016], [0018], [0024] – [0027], [0037] – [0038], [0047] – [0048], [0054] * <br> ----- | 1–16 | |
| A | US 2009/055037 A1 (DUPRE ALAIN [FR] ET AL) 26 février 2009 (2009-02-26) <br> * alinéas [0007], [0012], [0022] – [0026], [0078] * <br> * figures 2-3 * <br> ----- | 4–6 | |

DOMAINES TECHNIQUES RECHERCHES (IPC)

G08G
G05D

Le présent rapport a été établi pour toutes les revendications

| Lieu de la recherche | Date d'achèvement de la recherche | Examinateur |
|---|---|---|
| La Haye | 19 septembre 2023 | Thareau-Berthet, N |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

..........................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 23 16 5786

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-09-2023

| Document brevet cité au rapport de recherche | Date de publication | Membre(s) de la famille de brevet(s) | Date de publication |
|---|---|---|---|
| US 2021375143 A1 | 02-12-2021 | CN 107408352 A | 28-11-2017 |
| | | EP 3152089 A1 | 12-04-2017 |
| | | JP 6459014 B2 | 30-01-2019 |
| | | JP 2017537012 A | 14-12-2017 |
| | | US 2018068567 A1 | 08-03-2018 |
| | | US 2021375143 A1 | 02-12-2021 |
| | | WO 2016154943 A1 | 06-10-2016 |
| US 2012150426 A1 | 14-06-2012 | CN 103262141 A | 21-08-2013 |
| | | EP 2649603 A1 | 16-10-2013 |
| | | JP 6025742 B2 | 16-11-2016 |
| | | JP 2014500556 A | 09-01-2014 |
| | | US 2012150426 A1 | 14-06-2012 |
| | | WO 2012078231 A1 | 14-06-2012 |
| US 2009055037 A1 | 26-02-2009 | FR 2920232 A1 | 27-02-2009 |
| | | US 2009055037 A1 | 26-02-2009 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2841977 B1
- FR 2920232 B1
- US 2009055037 A1
- US 2021375143 A1
- US 2012150426 A1